# EUROPEAN PATENT APPLICATION

(11) **EP 1 145 901 A1**
(43) Date of publication of application: **17.10.2001**
(21) Application number: 00201311.8
(22) Date of filing: 12.04.2000
(51) Int. Cl.: B60P 1/46, B60P 1/02

(54) **Improved loading device for trucks with more than one loading floor**

(71) Applicant: Dhollander, Jan Jozef Prudence, 9160 Lokeren (BE); Derie, Pol Jan Lode, 9111 Belsele (BE)
(72) Inventor: Dhollander, Jan Jozef Prudence, 9160 Lokeren (BE); Derie, Pol Jan Lode, 9111 Belsele (BE)
(74) Representative: Donné, Eddy

(57) **Abstract**

Improved loading device for trucks with more than one loading floor, substantially consisting of, on one hand, an outer elevator (7) formed by a loading board (13) which can be moved up and down, and a lifting mechanism for this loading board (13) and, on the other hand, an inner elevator (8) substantially formed by a platform (20) and a lifting mechanism for this platform (20), characterized in that the lifting mechanism for the loading board (13) and the lifting mechanism for the platform (20) comprise two common columns (5-6), whereby in each column (5-6), a displacement element is provided of which one displacement element forms part of the lifting mechanism for the loading board (13) of the outer elevator (7) and the other displacement element forms part of the lifting mechanism for the platform (20) of the inner elevator (8).

## Description

The present invention relates to an improved loading device for trucks with more than one loading floor, more particularly for a loading device being of the type substantially consisting of, on one hand, an outer elevator and, on the other hand, an inner elevator, whereby the outer elevator substantially consists of a hingeable loading board movable in height and a lifting mechanism for this loading board and whereby the inner elevator substantially consists of a platform and a lifting mechanism for this platform.

More particularly, the invention relates to a loading device for motor trucks, such as trucks, trailers, semitrailers or similar, with more than one loading floor, whereby the platform of the inner elevator can be moved between the loading floors, and whereby the loading board of the outer elevator also can be moved, at least up to the height of the second loading floor, such that a maximum flexibility of the truck in regard to loading and unloading is obtained.

It is known to provide both an outer elevator and an inner elevator with a lifting device substantially consisting of at least two columns, one at each side of the vehicle, whereby in each of the columns at least one displacement element, for example, in the form of a pressure cylinder, is provided, which, either directly or indirectly, for example, by means of cables, is attached to the loading board of the outer elevator, the platform of the inner elevator, respectively.

With the known lifting devices, the presence of at least two pressure cylinders is necessary for the horizontal displacement of the outer elevator, the inner elevator, respectively.

These known lifting devices, however, show the major disadvantage that they need a lot of space and are heavy, which is disadvantageous in respect to the loading space and the maximum loading capacity of the vehicle, in consideration of the fact that with the known vehicles, as already mentioned, the outer elevator as well as the inner elevator have to comprise a separate lifting device with at least two columns and at least two pressure cylinders.

Another disadvantage of the known lifting devices consists in that the two lifting cylinders which move the loading board of the outer elevator or the platform of the inner elevator up and down, always have to be driven synchronously, such that a very precise control is necessary in order to prevent that the loading board of the outer elevator, the platform of the inner elevator, respectively, will become jammed in its guides.

The present invention thus aims at an improved loading device for trucks with more than one loading floor which does not show the aforementioned or other disadvantages and which consequently allows for a larger loading capacity, whereas the flexibility for loading and unloading remains the same.

To this aim, the invention relates to an improved loading device for trucks with more than one loading floor, substantially consisting of, one one hand, an outer elevator formed by a loading board which can be moved up and down, and a lifting mechanism for this loading board and, on the other hand, an inner elevator substantially formed by a platform and a lifting mechanism for this platform, whereby the lifting mechanism for the outer elevator and the lifting mechanism for the inner elevator comprise two common columns, whereby in each column, a displacement element is provided, in such a manner that one displacement element forms part of the lifting mechanism for the loading board of the outer elevator and the other displacement element forms part of the lifting mechanism for the platform of the inner elevator.

Preferably, the lifting devices are connected to the loading board of the outer elevator, the platform of the inner elevator, respectively, by means of cables.

In a preferred form of embodiment, the aforementioned displacement element shall consist of a pressure cylinder, but can also be formed by a lifting screw or such.

Preferably, the aforementioned platform of the inner elevator and the loading board of the outer elevator each are mounted on a pair of slides which each can be shifted in respect to the columns.

An aforementioned pair of slides can be commanded by a single pressure cylinder provided in one of the columns to which the slides are connected, by means of cables running over one or more pulleys.

With the intention of better showing the characteristics of the invention, hereafter, as an example without any limitative character, a preferred form of embodiment of an improved loading device for trucks with more than one loading floor is described, with reference to the accompanying drawings, wherein:
figure 1, in perspective, represents the rear part of a truck provided with an improved loading device according to the invention;
figure 2 represents a cross-section according to line II-II in figure 1;
figures 3 and 4, at a larger scale, represent cross-sections according to line III-III, IV-IV, respectively, in figure 2;
figure 5 represents a cross-section according to line V-V in figure 2;
figures 6 and 7 represent cross-sections similar to those of figure 5, however, with the improved loading device according to the invention respectively in another position;
figure 8 represents a perspective view of the lifting
mechanisms of the invention.

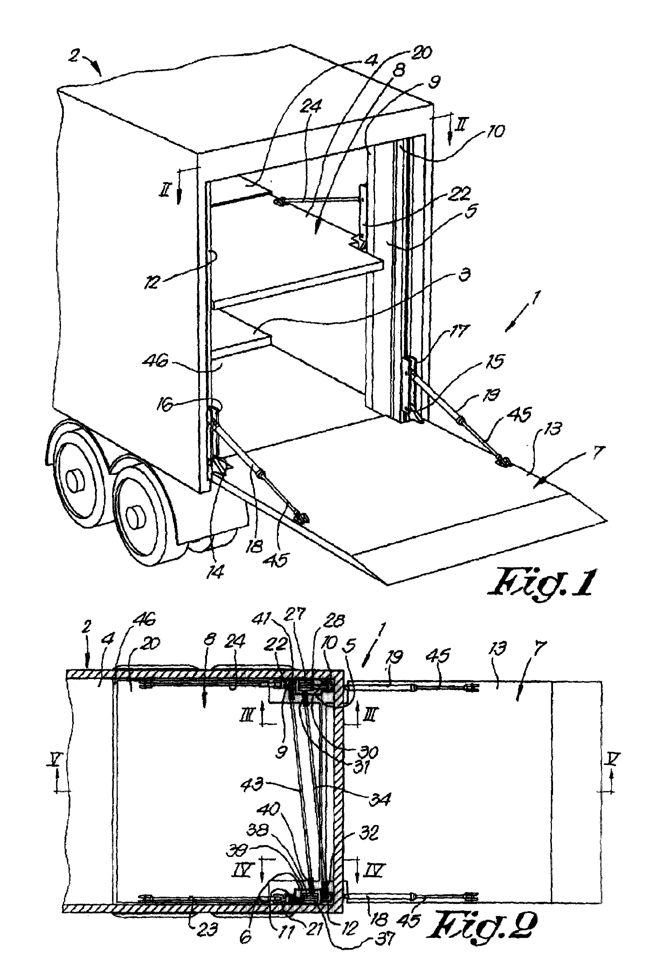

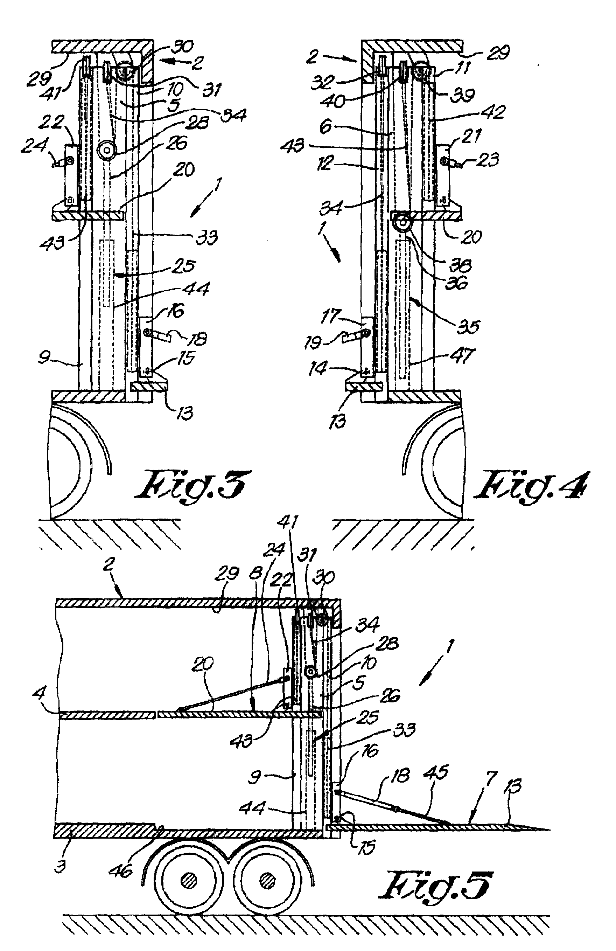

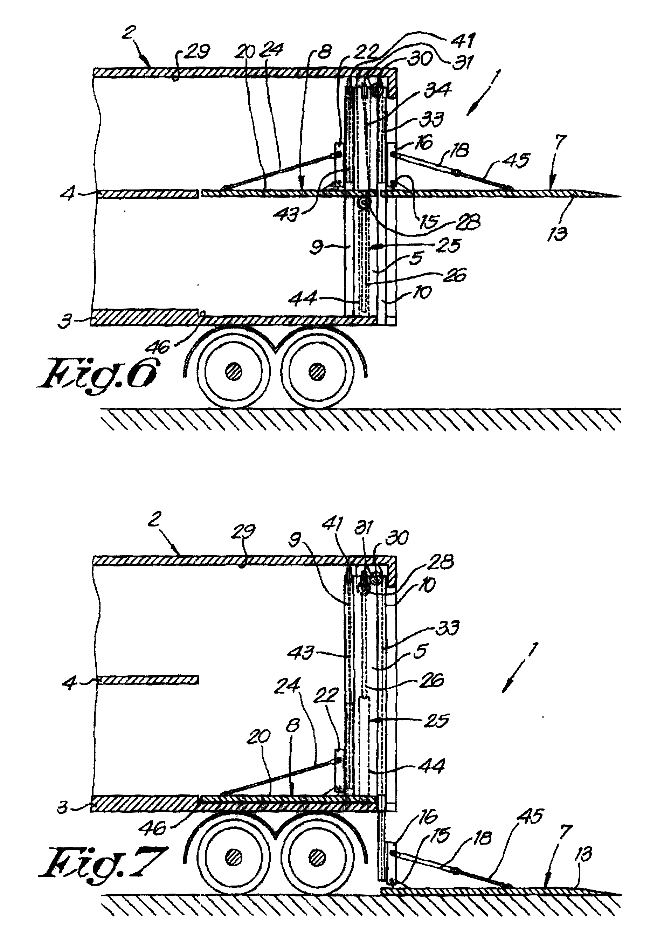

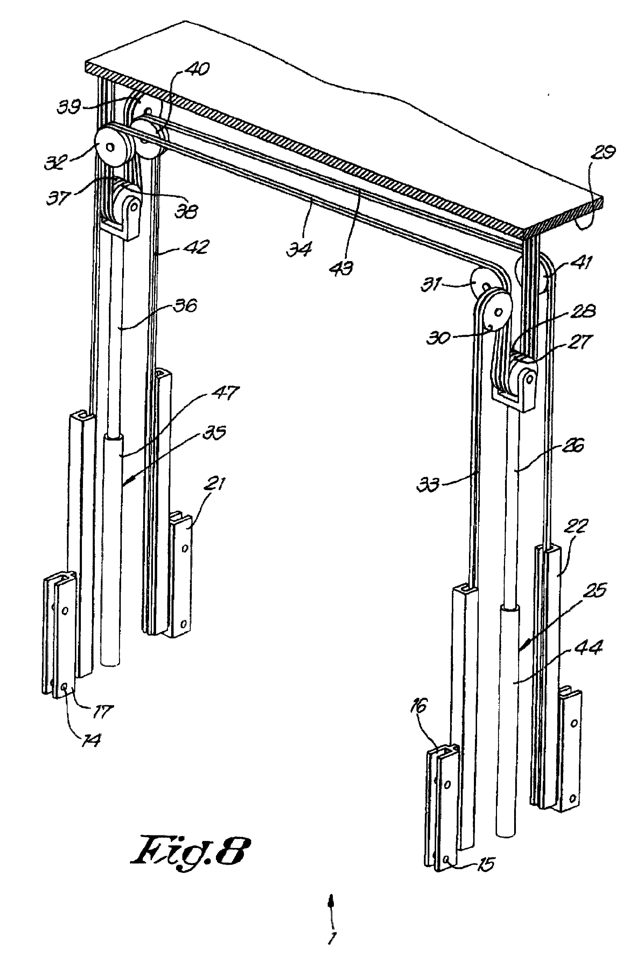

As represented in the figures, an improved loading device 1 of a truck 2 with two loading floors 3-4 substantially consists of two columns 5-6, preferably closed over the entire height, which are attached to the walls of the truck 2, an outer elevator 7, and an inner elevator 8.

Against the mutually opposed sides of each column 5-6, C-shaped profiles 9-10 and 11-12 are attached, whereby the open side of the C-shaped profiles 9-10-11-12 concerned is directed away from the column 5, 6 respectively.

The aforementioned outer elevator 7 substantially consists of a loading board 13 which, by means of two hinges 14-15, is mounted on two slides 16-17 which are provided in the two C-shaped profiles 10-12 in a movable manner.

Further, the loading board 13 is connected to the aforementioned slides 16-17 by means of two hydraulic cylinders 18-19, whereby the engagement point of the cylinders 18-19 on the slides 16-17 is situated above the aforementioned hinges 14-15.

The inner elevator 8 substantially consists of a vertically movable platform 20 which is connected to two slides 21-22 which are provided in the two C-shaped profiles 9-11 in a movable manner.

The platform 20, on one hand, at its one extremity is provided directly on the slides 21-22 and, on the other hand, with its other extremity, is attached to these slides 21-22 by means of two rods 23-24.

In the aforementioned column 6, a displacement element in the form of a pressure cylinder 25 is mounted, the piston rod 26 of which can be extended upward.

To the extremity of the piston rod 26, two pairs of pulleys 27-28 are attached.

To the upper wall 29 of the truck, also two pairs of pulleys 30-31 are attached, whereof one pair of pulleys 30 is provided partially in the column 6 and partially in the C-shaped profile 10, with the rotation axis perpendicular to the longitudinal direction of the truck 2, and the other pair of pulleys 31 is provided partially in the column 6, with the rotation axis approximately in the longitudinal direction of the truck 2.

Further, a pair of pulleys 32 is attached to the upper wall 29, at the height of the aforementioned C-shaped profile 12.

Finally, two pairs of cables, 33-34, respectively, are attached to the upper wall 29 of the truck 2, whereby the cables 33 are guided over the pulleys 27 and 30 and further are attached to the slide 17 of the outer elevator 7, whereas the cables 34 are guided over the pulleys 28 at the extremity of the piston rod 26 and over the pulleys 31 and 32 in order to be subsequently connected to the slide 16 of the outer elevator 7, as represented in figure 8.

The presence of two pairs of cables 33-34, in other words, two double cables 33 and 34, is only desirable for safety's sake, however, it is not necessary in any way.

In a similar manner, in the column 5 also a displacement element in the form of a pressure cylinder 35 is mounted, the piston rod 36 of which is upwardly extendable, whereby at the extremity of this piston 36, two pairs of pulleys 37-38 are mounted.

At the upper wall 29 of the truck 2, a pair of pulleys 39 is mounted which partially are situated in the column 5 and partially in the C-shaped profile 11, whereby the rotation axis of these pulleys 39 is situated perpendicular to the longitudinal direction of the truck 2. Also, a pair of pulleys 40 is attached to the aforementioned upper wall 29, whereby the rotation axis of these pulleys 40 is situated approximately in the longitudinal direction of the truck 2.

Further, at the height of the C-shaped profile 9, a pair of pulleys 41 is attached at the upper wall 29.

Finally, two pairs of cables 42-43 are attached at the upper wall 29 of the truck 2, whereby the cables 42 are guided over the pulleys 37 and 39 and further are attached to the slide 21 of the inner elevator 8, whereas the cables 43 are guided over the pulleys 38 at the extremity of the piston rod 36 and over the pulleys 40 and 41, in order to be subsequently connected to the slide 22 of the inner elevator 8.

Also in this case, the duplication of the cables 42-43 provides for additional safety.

The pressure cylinders 25 and 35, as well as the hydraulic cylinders 18 and 19 are in connection with a drive, not represented in the drawings, which can be controlled by a device known in itself.

Although in the form of embodiment described in the aforegoing, the hydraulic cylinders 25 and 35 are connected to the vehicle frame by means of the cylinder body beneath the columns 5 and 6, it is also possible to reverse this arrangement and to attach the cylinder bodies to the vehicle frame on top of the columns 5 and 6, whereby in that case the aforementioned cables will not be fixed at the upper wall 29 of the vehicle frame, but can be attached either to the body of the suspended cylinders 25-35 or the wall of the columns 5 and 6.

The functioning of the improved loading device according to the invention is very simple and as follows.

The lifting devices of the outer lift 7 and the inner lift 8 are controlled independently from each other.

In order to open the loading board 13, the hydraulic cylinders 18 and 19 are drawn out, such that the loading board 13 pivots around its hinges 14 and 15, until it is situated horizontally.

The upward displacement of the loading board 13 is performed by drawing the piston rod 26 of the pressure cylinder 25 into the cylinder housing 44, such that the distance between the pulleys 27-28, on one hand, and the upper wall 29 and the pulleys 30-31, on the other hand, becomes larger, with the consequence that the slides 16 and 17, both at the same time and over an equal distance, are drawn upward by means of the cables 33 and 34, which distance is equal to the double distance over which the piston 26 has been moved.

In order to move the loading board 13 back down, the piston rod 26 again is pushed out of the cylinder housing 44, with the consequence that the slides 16-17, under the weight of the loading board 13, move downward in the C-shaped profiles 10 and 12.

The closing of the loading board 13 is performed by drawing-in the piston rods 45 of the hydraulic cylinders 18 and 19, as a result of which the end of the loading board 13 is drawn upward.

The functioning of the lifting device of the inner elevator 8 is analogous to the functioning of the lifting device of the inner elevator 7, with the difference that the platform 20 of the inner elevator 8 always remains parallel to the loading floors 3-4.

When the platform 20 is in its lowermost position, as represented in figure 7, the upper side of this platform 20 is situated at the same height as the remainder of the lowermost loading floor 3. To this aim, a recess 46 is provided in this lowermost loading floor 3. In this position, the piston rod 36 is slid out of the cylinder housing 47.

In order to move the platform 20 upward, the piston rod 36 is drawn into the cylinder housing 47, such that the distance between the pulleys 37-38, on one hand, and the upper wall 29 and the pulleys 39-40, on the other hand, is increased, with the consequence that the slides 21 and 22, both at the same time and over the same distance, are drawn upward by the cables 42, 43 respectively, into the C-shaped profiles 9 and 11, which distance is two times the distance over which the piston rod 36 has been moved.

Hereby, the rods 23 and 24 serve for maintaining the platform 20 horizontal.

The platform 20 can be moved downward again by pushing the piston rod 36 again out of the cylinder housing 47.

It is clear that due to the improved loading device according to the invention, space, as well as weight, is economized in the loading zone, more particularly in that only one pair of columns 5-6 is necessary, whereas, however, the flexibility, obtained by the combination of an inner elevator 8 and an outer elevator 7, is maintained.

The present invention is in no way limited to the form of embodiment described by way of example and represented in the figures, on the contrary, such improved loading device for trucks with more than one loading floor may be realized in a variety of forms and dimensions without leaving the scope of the invention.

## Claims

1. Improved loading device for trucks with more than one loading floor, substantially consisting of, on one hand, an outer elevator (7) formed by a loading board (13) which can be moved up and down, and a lifting mechanism for this loading board (13) and, on the other hand, an inner elevator (8) substantially formed by a platform (20) and a lifting mechanism for this platform (20), **characterized in that** the lifting mechanism for the loading board (13) and the lifting mechanism for the platform (20) comprise two common columns (5-6), whereby in each column (5-6), a displacement element is provided of which one displacement element forms part of the lifting mechanism for the loading board (13) of the outer elevator (7) and the other displacement element forms part of the lifting mechanism for the platform (20) of the inner elevator (8).

2. Improved loading device according to claim 1, **characterized in that** the lifting mechanisms are connected to the loading board (13) of the outer elevator, the platform (20) of the inner elevator, respectively, by means of cables (33-34, 42-43).

3. Improved loading device according to claim 1 or 2, **characterized in that** the displacement elements each consist of a pressure cylinder (25-35).

4. Improved loading device according to claim 2, **characterized in that** the aforementioned platform (20) is mounted on a pair of slides (21-22) which can be moved in respect to the columns (5-6).

5. Improved loading device according to any of the preceding claims, **characterized in that** the aforementioned loading board (13) is mounted on a pair of slides (16-17) which can be moved in respect to the columns (5-6).

6. Improved loading device according to claim 4 and 5, **characterized in that** the slides (16-17, 21-22) can be moved in C-shaped profiles (9-11, 10-12) which are attached to the columns (5-6).

7. Improved loading device according to claim 6, **characterized in that** each of the aforementioned pairs of slides (16-17, 21-22) is moved by one pressure cylinder (25-26) which is provided in one of the columns (5-6), to which the slides (16-17, 21-22), by means of one or more pulleys (27-28-30-31-32, 37 to 41), are connected by means of cables (33-34, 42-43).

8. Improved loading device according to any of the preceding claims, **characterized in that** the bodies (44-47) of the pressure cylinders (25-35) are mounted at the underside of the truck, with the piston rods (26-36) directed upward.

9. Improved loading device according to any of the claims 1 to 7, **characterized in that** the bodies (44-47) of the pressure cylinders (25-35) are mounted at the upper side of the truck, with the piston rods (26-36) directed downward.

10. Improved loading device according to claims 7 and 8, **characterized in that** at the extremity of the piston rods (26-36) of the pressure cylinders (25-35), two pairs of pulleys (27-28, 37-38) are mounted; that, against the upper wall (29) of the truck or against another fixed point of the columns (5-6) or of the vehicle frame, also two pairs of pulleys (30-31, 39-40) are mounted, whereof one pair of pulleys (30-39) is provided partially in the column (5-6) and partially in the C-shaped profile (1011), and the other pair of pulleys (31-40) is provided partially in the column (5-6); that, further, a pair of pulleys (32,41) is mounted on the upper wall (29) or at another fixed part in the upper part of the vehicle frame, at the height of the C-shaped profile (12-9), and that finally two pairs of cables (33-34, 42-43) are attached in the column (5-6), to the upper wall (29) or to another fixed part, whereby the cables (33-42), by means of the pulleys (27 and 30, 37 and 39) are attached to the slide (16-21) and whereby the cables (34, 43) are connected to the slide (17-22) by means of the pulleys (28-38) at the extremity of the piston rods (26-36) and by means of the pulleys (31-32, 40-41).

11. Improved loading device according to claims 7 and 9, **characterized in that** at the extremity of the piston rods (26-36) of the pressure cylinders (25-35), two pairs of pulleys (27-28, 37-38) are mounted; that, against the upper wall (29) of the truck or against another fixed point of the columns (5-6) or of the vehicle frame, also two pairs of pulleys (30-31, 39-40) are mounted, whereby one pair of pulleys (30-39) is provided partially in the column (5-6) and partially in the C-shaped profile (1011), and the other pair of pulleys (31-40) is provided partially in the column (5-6); that, further, a pair of pulleys (32,41) is mounted on the upper wall (29) or at another fixed part in the upper part of the vehicle frame, at the height of the C-shaped profile (12-9), and that finally two pairs of cables (33-34, 42-43) are attached in the column (5-6) to the housing (44-47) of the cylinders (25-35) or to the columns (5-6), whereby the cables (33-42) are attached to the slide (16-21) by means of the pulleys (27 and 30, 37 and 39) and whereby the cables (34-43) are connected to the slides (17-22) by means of the pulleys (28-38) at the extremity of the piston rods (26-36) and by means of the pulleys (31-32, 40-41).
